# EUROPEAN PATENT SPECIFICATION

(11) **EP 4 481 896 B1**
(45) Date of publication and mention of the grant of the patent: **16.09.2026**
(21) Application number: 23812020.8
(22) Date of filing: 27.04.2023
(51) Int. Cl.: H01M 10/6554, H01M 10/613, H01M 50/211, H01M 50/233, H01M 50/238

(54) **BATTERY MODULE**
BATTERIEMODUL
MODULE DE BATTERIE

(30) Priority: 26.05.2022 KR 20220064916
(43) Date of publication of application: 25.12.2024
(73) Proprietor: LG Energy Solution, Ltd., Seoul 07335 (KR)
(72) Inventor: JUNG, Ki Taek, Daejeon 34122 (KR); PARK, Jun Kyu, Daejeon 34122 (KR); SEONG, Jun Yeob, Daejeon 34122 (KR)
(74) Representative: Plasseraud IP
(86) International application number: PCT/KR2023/005821
(87) International publication number: WO 2023/229244

(56) References cited:
- WO-A1-2022/045619
- WO-A1-2022/045619
- JP-A- 2022 519 666
- KR-A- 20200 011 787
- KR-A- 20210 077 416
- KR-A- 20210 077 416
- KR-A- 20210 133 533
- US-A1- 2014 295 235

## Description

### TECHNICAL FIELD

### CROSS-REFERENCE TO RELATED APPLICATION

The present application claims the benefit of the priority of Korean Patent Application 10-2022-0064916, filed on May 26, 2022.

### TECHNICAL FIELD

The present invention relates to a battery module, and more particularly, to a battery module, in which a cell block assembly is easily inserted into a frame, and a component welding part, etc., such as a cooling plate is prevented from being ruptured during insertion and assembly of the cell block assembly to prevent the battery module from being defective, thereby implementing remarkably excellent concept products.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases. However, an operating voltage of a unit cell, i.e., a unit battery cell is about 2.5 V to about 4.2 V.

Therefore, when a higher output voltage is required, a plurality of individual battery cells are connected to form a secondary battery module, and a plurality of battery modules are assembled to form a battery pack.

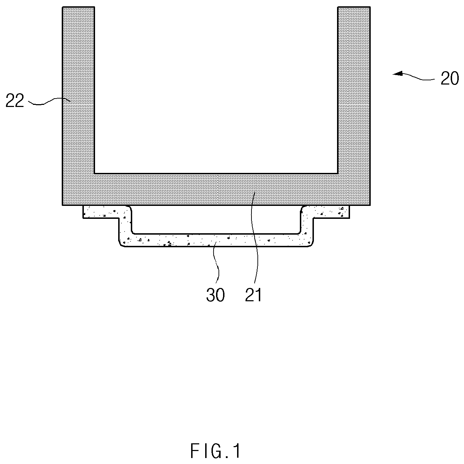

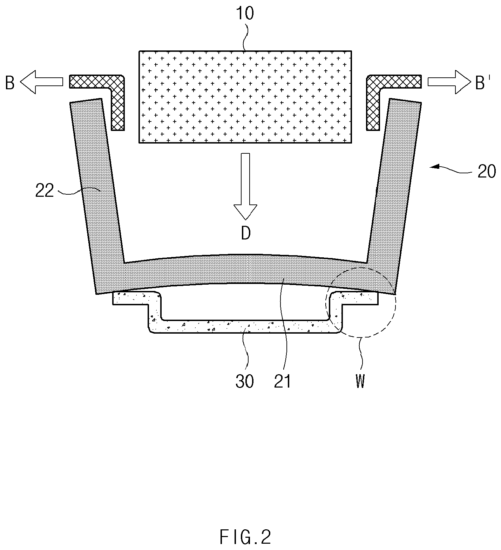

FIG. 1 is a cross-sectional view illustrating a portion of a frame in a battery module according to a related art. FIG. 2 is a cross-sectional view illustrating a state in which a cell block assembly is inserted into the frame of FIG. 1.

Referring to FIGS. 1 and 2, in a battery module constituted by pouch-type secondary batteries, a cell block assembly 10 configured by stacking a plurality of battery cells, which are manufactured as a pouch-type secondary battery by a predetermined number is mounted in a frame 20 having a 'U'-shaped cross-section, and the frame 20 is provided so that an upper side thereof is opened, and both sides thereof face a bottom surface of the cell block assembly 10.

Although not shown in the drawings, a top plate may be coupled to the opened upper side of the frame through brazing, and an end plate may be coupled to each of front and rear sides of the frame to generally provide a battery module having a rectangular parallelepiped shape. In addition, a cooling plate 30 in which a coolant is circulated to cool the block assembly 10 and the frame 20 may be coupled through the brazing welding.

Referring to FIG. 2, in which the cell block assembly is inserted into the frame of FIG. 1, according to the related art, in order to insert the cell block assembly into the frame, a sidewall of the frame may be spread to both sides B and B', and the cell block assembly may be inserted while moving in a downward direction D. Here, in the process of spreading both the sides of the frame sidewall, a phenomenon in which a shape of the bottom part of the frame is convexly bent upward may occur. In the process, there is a problem in that a brazing-welded part W of the cooling plate mounted under the bottom part of the frame is ruptured (or damaged). This may cause a defect in the battery module, and thus, a product having an excellent concept may not be implemented, which is a problem.

US2014/295235 discloses a battery pack having a groove. KR 2021 0077416 A discloses a battery pack of the prior art having a cooling plate.

### DISCLOSURE OF THE INVENTION

### TECHNICAL PROBLEM

The present invention has been made to solve the above problem, and an object of the present invention is to provide a battery module, in which a cell block assembly is easily inserted into a frame, and a component welding part, etc., such as a cooling plate is prevented from being ruptured during insertion and assembly of the cell block assembly to prevent the battery module from being defective, thereby implementing remarkably excellent concept products.

### TECHNICAL SOLUTION

A battery module of the present invention includes a cell block assembly that is an assembly of a plurality of cells, a frame configured to surround bottom ad side surfaces of the cell block assembly, a top plate disposed on a top surface of the cell block assembly, an end plate disposed on front and rear surfaces of the cell block assembly, and a cooling plate coupled to a bottom surface of the frame at a lower side of the frame, wherein the frame include a bottom part configured to surround a bottom surface of the cell block assembly and a sidewall configured to surround a side surface of the cell block assembly, and a groove having a recessed shape is defined in the sidewall.

The cooling plate is coupled to a bottom surface of the frame through brazing welding.

The groove is defined in a lower end of the sidewall.

The groove may have a cross-section that is defined in a V shape.

The groove is defined in an inner wall surface of the sidewall.

The groove may be defined in a longitudinal direction (L) of the cell block assembly.

The groove may be defined by press processing.

The groove may be provided in a straight line shape when facing an inner wall surface of the sidewall.

The groove may be provided in a curved shape when facing an inner wall surface of the sidewall.

The groove may be provided in a lattice shape when facing an inner wall surface of the sidewall.

The battery module may further include an end plate disposed on each of front and rear surfaces of the cell block assembly and a top plate disposed on a top surface of the cell block assembly.

### ADVANTAGEOUS EFFECTS

The battery module according to the present invention may include the cell block assembly, which is the assembly of the plurality of cells, the frame surrounding the bottom and side surfaces of the cell block assembly, and the cooling plate coupled to the bottom surface of the frame at the lower side of the frame, the frame may include the bottom part surrounding the bottom surface of the cell block assembly and the sidewall surrounding the side surface of the cell block assembly, and the groove having the recessed shape may be formed in the sidewall. Therefore, the cell block assembly may be easily inserted into the frame, and the welding part, etc., such as the cooling plate may be prevented during the insertion and assembly of the cell block assembly to prevent the battery module from being defective, thereby implementing the remarkably excellent concept products.

### BRIEF DESCRIPTION OF THE DRAWINGS

FIG. 1 is a cross-sectional view illustrating a portion of a frame in a battery module according to a related art.
FIG. 2 is a cross-sectional view illustrating a state in which a cell block assembly is inserted into the frame of FIG. 1.
FIG. 3 is a partial cross-sectional view of a battery module according to Embodiment 1 of the present invention.
FIG. 4 is a cross-sectional view illustrating a state in which a cell block assembly is inserted into the frame illustrated in FIG. 1.
FIG. 5(a) is a perspective view illustrating a portion of a battery module illustrated in FIG. 1.
FIG. 5(b) is a cross-sectional view of a portion indicated by a dotted line H illustrated in FIG. 5(a).
FIG. 6 is a partial perspective view of a battery module according to Embodiment 2 of the present invention.
FIG. 7 is a partial perspective view of a battery module according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

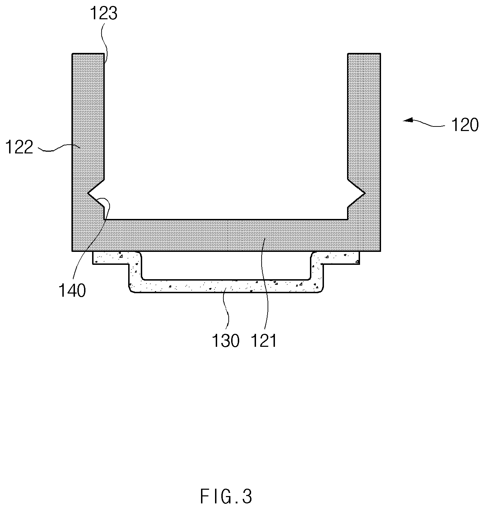

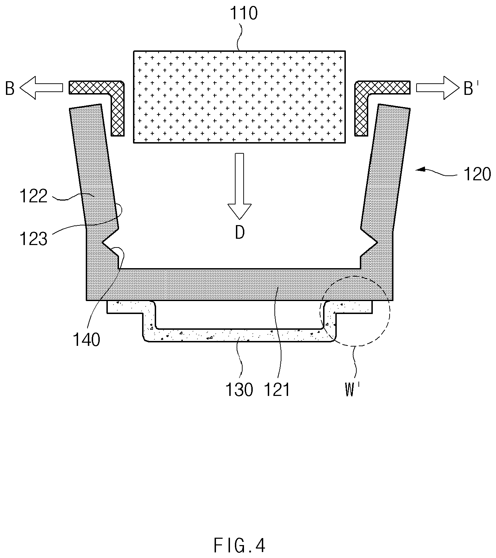

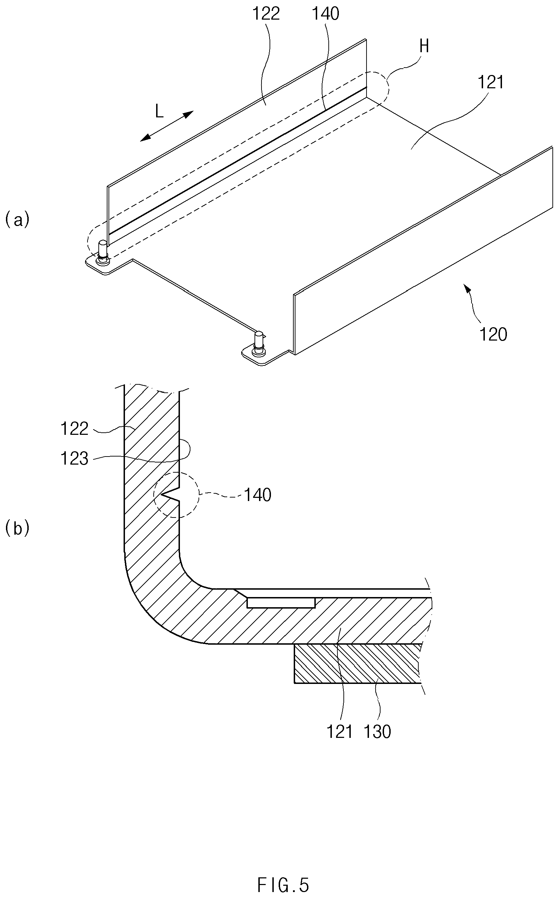

FIG. 3 is a partial cross-sectional view of a battery module according to Embodiment 1 of the present invention. FIG. 4 is a cross-sectional view illustrating a state in which a cell block assembly is inserted into the frame illustrated in FIG. 1. FIG. 5(a) is a perspective view illustrating a portion of a battery module illustrated in FIG. 1. FIG. 5(b) is a cross-sectional view of a portion indicated by a dotted line H illustrated in FIG. 5(a).

Referring to FIGS. 3 to 5, a battery module according to Embodiment 1 of the present invention may include a cell block assembly 110, a frame 120, a top plate (not shown), an end plate (not shown), and a cooling plate 130.

The cell block assembly 110 may be an assembly of a plurality of battery cells. Specifically, the battery module may be a cell assembly configured by stacking a plurality of battery cells manufactured as a pouch-type secondary battery by a predetermined number.

The frame 120 may be a structure surrounding bottom and side surfaces of the cell block assembly 110. As illustrated in FIG. 5 (a), the frame 120 may have a shape extending in a longitudinal direction L of the cell block assembly 110 (cell block assembly 110 that is not illustrated in FIG. 5) and has a cross-section having a U shape.

Here, particularly, the frame 120 may include a bottom part 121 surrounding the bottom surface of the cell block assembly 110 and a sidewall 122 surrounding the side surface of the cell block assembly 110.

The battery module according to Embodiment 1 of the present invention may include a top plate (not shown) and an end plate to implement a battery module of which all sides are closed. The end plate may be respectively disposed on front and rear surfaces of the cell block assembly 110. In addition, the top plate may be disposed on a top surface of the cell block assembly 110.

Specifically, the top plate may be coupled to an opened upper side of the frame 120 by brazing welding. In addition, the battery module having a rectangular parallelepiped shape may be formed by welding the end plate to each of the front and rear of the frame 120. In this case, power output from the cell block assembly may be output to the outside of the end plate.

The cooling plate 130 may be coupled to a bottom surface of the frame 120 at a lower side of the frame 120. Specifically, the cooling plate 130 may be coupled to a bottom surface of a bottom part 121 of the frame 120. The manner in which the cooling plate 130 is coupled to the bottom surface of the bottom part 121 of the frame 120 may be performed by welding, particularly by brazing welding. A cooling passage may be formed in the cooling plate 130, and a coolant may be circulated to cool the cell block assembly 110 and the frame 120.

In addition, referring to FIGS. 3 and 5, the battery module according to Embodiment 1 of the present invention may have a groove 140 having a shape recessed in the sidewall 122 of the frame 120.

As illustrated in FIG. 4, the cell block assembly 110 may be inserted into the frame 120 illustrated in FIG. 3 in a direction D' from top to bottom. Specifically, in order to insert the cell block assembly 110 into the frame 120, the sidewall 122 of the frame 120 may be spread to both sides B and B', and the cell block assembly 110 may be inserted while moving in a downward direction D.

In the battery module according to Embodiment 1 of the present invention, since the groove 140 is formed in the sidewall 122 of the frame 120, the shape of the bottom part 121 may not be bent or deformed in the process of spreading the sidewall 122 of the frame 120 to both the sides B and B'. In the portion at which the groove 140 is defined in the sidewall 122 of the frame 120, plastic deformation may occur in the process of spreading the sidewall 122 to both the sides B and B'. In this case, the process of inserting the cell block assembly 110 into the frame 120 may be significantly facilitated.

In addition, since the plastic deformation occurs at the portion of the sidewall 122, at which the groove 140 is defined, force by which the bottom part 121 is defined may not occur even in the process of spreading the sidewall 122 to both the sides B and B'. In the battery module according to Embodiment 1 of the present invention, since the cell block assembly 110 may be inserted into the frame 120 without the bending or deformation of the bottom part 121, a welding part W' of the cooling plate may be prevented from being ruptured during the insertion and assembly of the cell block assembly 110. In addition, if a welding part of a component such as the cooling plate 130 is prevented from being ruptured, the battery module may be prevented from being defective to implement remarkably excellent concept products.

In the battery module according to Embodiment 1 of the present invention, the groove 140 formed in the sidewall 122 of the frame 120 may be formed in an inner wall surface 123 of the sidewall 122. If the groove 140 is formed on the inner wall surface 123 of the sidewall 122, when a size and depth of the same groove 140 are the same, it may be advantageous of increasing in angle at which both the sides B and B' are spread. In addition, if the groove 140 is formed in an outer wall surface, since there is possibility of the rupture of the sidewall 122 itself, the forming of the groove in the inner wall surface may be advantageous in inducing safer plastic deformation.

In addition, the groove 140 may be formed by, for example, press pressing and may be formed in a form stamped by the press processing. In this case, the groove 140 may be formed on the inner wall surface 123 of the sidewall 122, and a cross-section of the groove 140 may be formed in a V shape. A thickness of the sidewall 122 of the frame 120 may be adjusted as needed at a portion in which the groove 140 is formed through a V shape. The thickness of the sidewall 122 may be gradually reduced toward a center of the groove 140, and a thickness of the thinnest portion may be set to an appropriate value to prevent the sidewall 122 of the frame 120 from being ruptured during plastic deformation.

In addition, in the battery module according to Embodiment 1 of the present invention, the groove 140 formed in the sidewall 122 of the frame 120 may be formed in a lower end of the sidewall 122. When the groove 140 is formed at the lower end of the sidewall 122, a size of an opening of the frame 120 may further increase to both sides in the process of spreading the sidewall 122 of the frame 120 to both sides B and B'. That is, referring to FIG. 4, the opening of the frame 120 may be spread while the sidewall 122 of the frame 120 is bent outward from the portion at which the groove 140 is formed. A maximum width of the opening of the frame 120 may increase as the groove 140 is formed closer to the lower end of the sidewall 122.

Referring to FIG. 5( a ), the groove 140 may be formed in the longitudinal direction L of the cell block assembly 110. Referring to a portion indicated by a dotted line H in FIG. 5(a), the groove 140 may be formed in the longitudinal direction L of the cell block assembly 110 and may be continued from a front end to a rear end of the frame 120. As described above, when it should be formed from the front end to the rear end of the frame 120, all portions of the frame 120 may be plastically deformed outward in the longitudinal direction L when the sidewall 122 of the frame 120 is deformed outward around the groove 140. Soft deformation may be possible without a portion that is forcibly deformed through such a method.

Referring to FIG. 5 (a), the groove 140 may be provided in a straight line shape when facing the inner wall surface 123 of the sidewall 122. When formed in this manner, since the sidewall 122 of the frame 120 is uniformly deformed from the front side to the rear side of the frame 120 at once, a uniform product may be manufactured.

### Embodiment 2

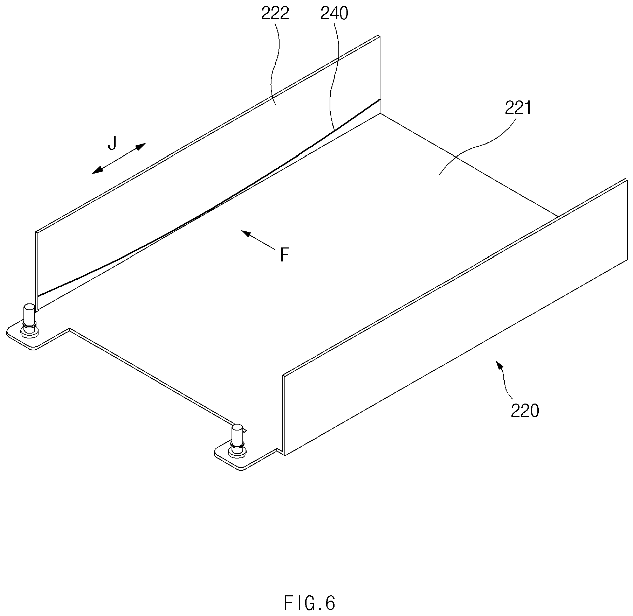

FIG. 6 is a partial perspective view of a battery module according to Embodiment 2 of the present invention.

Example 2 of the present invention is different from Example 1 in that the groove is formed in a curved shape.

The contents that are duplicated with Embodiment 1 will be omitted as much as possible, and Embodiment 2 will be described with a focus on the differences. That is, it is obvious that contents that are not described in Embodiment 2 may be regarded as the contents of Embodiment 1 if necessary.

Referring to FIG. 6, in a battery module according to Embodiment 2 of the present invention, a groove 240 may be provided in a curved shape when facing an inner wall surface of a sidewall 222 of a frame 220. That is, when viewed in a direction of an arrow F in FIG. 6 the groove 240 may have a curved shape. For example, the curve may have a shape of a portion or whole of a U shape.

As described above, the shape of the groove 240 may be formed to have a curve because a process of forming the groove 240 is performed by a press. If the method for forming the groove 240 is an extrusion method, it may be impossible to form the groove 240 in such a curved shape. The forming of the groove 240 in the curved shape may be advantageous when implementing different degrees of spreading in a longitudinal direction J of the frame 220.

### Embodiment 3

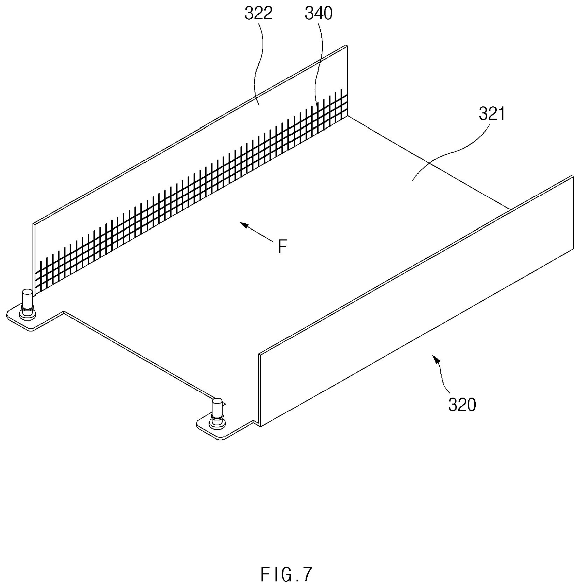

FIG. 7 is a partial perspective view of a battery module according to Embodiment 3 of the present invention.

Embodiment 3 of the present invention is different from Embodiment 1 in that a groove is formed in the form of a lattice.

The contents that are duplicated with Embodiments 1 and 2 will be omitted as much as possible, and Embodiment 3 will be described with a focus on the differences. That is, it is obvious that the contents that are not described in Embodiment 3 may be supplemented as contents of Embodiments 1 and 2 if necessary.

Referring to FIG. 7, in a battery module according to Embodiment 3 of the present invention, a groove 340 may be provided in a lattice shape when facing an inner wall surface of a sidewall 322 of a frame 320. That is, when viewed in a direction of an arrow F in FIG. 7 the groove 340 may have the lattice shape. For example, this lattice may have like a portion of a checkerboard. In addition, the lattice-shaped grooves 340 may be formed in a lower portion of the sidewall 322.

As described above, the shape of the groove 340 may be formed to have the lattice shape because a process of forming the groove 340 is performed by a press. If the method for forming the groove 340 is an extrusion method, it may be impossible to form the groove 340 in such a lattice shape. The forming of the groove 340 in the lattice shape may be advantageous when a degree of deformation of the sidewall 322 of the frame 320 is to be different along a height direction of the sidewall 322 of the frame 320.

While the embodiments of the present invention have been described with reference to the specific embodiments, it will be apparent to those skilled in the art that various changes and modifications may be made without departing from the scope of the invention as defined in the following claims.

### [Description of the Symbols]

110: Cell block assembly
120, 220, 320: Frame
121, 221, 321: Bottom part
122, 222, 322: Sidewall
123: Inner wall surface of sidewall
130: Cooling plate
140, 240, 340: Groove
W, W': Welding part

## Claims

1. A battery module comprising:
a cell block assembly (110) that is an assembly of a plurality of cells;
a U-shaped frame (120, 220, 320) configured to surround bottom and side surfaces of the cell block assembly (110);
a top plate disposed on a top surface of the cell block assembly (110);
an end plate disposed on front and rear surfaces of the cell block assembly (110); and
a cooling plate (130) coupled to a bottom surface of the U-shaped frame (120, 220, 320) at a lower side of the U-shaped frame,
wherein the cooling plate (130) is coupled to a bottom surface of the U-shaped frame (120, 220, 320) through brazing welding,
wherein the U-shaped frame (120, 220, 320) comprises a bottom part (121, 221, 321) configured to surround a bottom surface of the cell block assembly (110) and a sidewall (122, 222, 322) configured to surround a side surface of the cell block assembly (110), and **characterized in that**
a groove (140, 240, 340) having a recessed shape is defined in the sidewall (122, 222, 322),
wherein the groove (140, 240, 340) is defined in a lower end of the sidewall (122, 222, 322),
wherein the groove (140, 240, 340) is defined in an inner wall surface (123) of the sidewall (122, 222, 322),
wherein the groove (140, 240, 340) is defined in a longitudinal direction (L) of the cell block assembly (110).

2. The battery module of claim 1, wherein the groove (140, 240, 340) has a cross-section that is defined in a V shape.

3. The battery module of claim 1, wherein the groove (140, 240, 340) is defined by press processing.

4. The battery module of claim 1, wherein the groove (140, 240, 340) is provided in a straight line shape when facing an inner wall surface (123) of the sidewall (122, 222, 322).

5. The battery module of claim 1, wherein the groove (240) is provided in a curved shape when facing an inner wall surface of the sidewall (222).

6. The battery module of claim 1, wherein the groove (340) is provided in a lattice shape when facing an inner wall surface of the sidewall (322).

## Patentansprüche

1. Batteriemodul, umfassend:
eine Zellenblockanordnung (110), die eine Anordnung einer Vielzahl von Zellen ist;
einen U-förmigen Rahmen (120, 220, 320), der konfiguriert ist, um Boden- und Seitenoberflächen der Zellenblockanordnung (110) zu umgeben;
eine obere Platte, die auf einer oberen Oberfläche der Zellenblockanordnung (110) angeordnet ist;
eine Endplatte, die auf vorderen und hinteren Oberflächen der Zellenblockanordnung (110) angeordnet ist; und
eine Kühlplatte (130), die mit einer Bodenoberfläche des U-förmigen Rahmens (120, 220, 320) an einer unteren Seite des U-förmigen Rahmens gekoppelt ist,
wobei die Kühlplatte (130) mit einer Bodenoberfläche des U-förmigen Rahmens (120, 220, 320) durch Hartlöten gekoppelt ist,
wobei der U-förmige Rahmen (120, 220, 320) einen Bodenteil (121, 221, 321), der konfiguriert ist, um eine Bodenoberfläche der Zellenblockanordnung (110) zu umgeben, und eine Seitenwand (122, 222, 322), die konfiguriert ist, um eine Seitenoberfläche der Zellenblockanordnung (110) zu umgeben, umfasst, und
**dadurch gekennzeichnet, dass**
eine Nut (140, 240, 340), die eine ausgesparte Form aufweist, in der Seitenwand (122, 222, 322) definiert ist,
wobei die Nut (140, 240, 340) an einem unteren Ende der Seitenwand (122, 222, 322) definiert ist,
wobei die Nut (140, 240, 340) an einer Innenwandoberfläche (123) der Seitenwand (122, 222, 322) definiert ist,
wobei die Nut (140, 240, 340) in einer Längsrichtung (L) der Zellenblockanordnung (110) definiert ist.

2. Batteriemodul nach Anspruch 1, wobei die Nut (140, 240, 340) einen Querschnitt aufweist, der in einer V-Form definiert ist.

3. Batteriemodul nach Anspruch 1, wobei die Nut (140, 240, 340) durch Pressverarbeitung definiert ist.

4. Batteriemodul nach Anspruch 1, wobei die Nut (140, 240, 340) in einer geradlinigen Form bereitgestellt ist, wenn sie einer Innenwandoberfläche (123) der Seitenwand (122, 222, 322) zugewandt ist.

5. Batteriemodul nach Anspruch 1, wobei die Nut (240) in einer gekrümmten Form bereitgestellt ist, wenn sie einer Innenwandoberfläche der Seitenwand (222) zugewandt ist.

6. Batteriemodul nach Anspruch 1, wobei die Nut (340) in einer Gitterform bereitgestellt ist, wenn sie einer Innenwandoberfläche der Seitenwand (322) zugewandt ist.

## Revendications

1. Module de batterie comprenant :
un ensemble de blocs de cellules (110) qui est un ensemble d'une pluralité de cellules ;
un châssis en forme de U (120, 220, 320) configuré pour entourer les surfaces inférieure et latérales de l'ensemble de blocs de cellules (110) ;
une plaque supérieure disposée sur une surface supérieure de l'ensemble de blocs de cellules (110) ;
une plaque d'extrémité disposée sur les surfaces avant et arrière de l'ensemble de blocs de cellules (110) ; et
une plaque de refroidissement (130) couplée à une surface inférieure du châssis en forme de U (120, 220, 320) au niveau d'un côté inférieur du châssis en forme de U,
dans lequel la plaque de refroidissement (130) est couplée à une surface inférieure du châssis en forme de U (120, 220, 320) par soudage par brasage,
dans lequel le châssis en forme de U (120, 220, 320) comprend une partie inférieure (121, 221, 321) configurée pour entourer une surface inférieure de l'ensemble de blocs de cellules (110) et une paroi latérale (122, 222, 322) configurée pour entourer une surface latérale de l'ensemble de blocs de cellules (110),
**caractérisé en ce que**
une rainure (140, 240, 340) ayant une forme en retrait est définie dans la paroi latérale (122, 222, 322),
dans lequel la rainure (140, 240, 340) est définie dans une extrémité inférieure de la paroi latérale (122, 222, 322),
dans lequel la rainure (140, 240, 340) est définie dans une surface de paroi intérieure (123) de la paroi latérale (122, 222, 322),
dans lequel la rainure (140, 240, 340) est définie dans une direction longitudinale (L) de l'ensemble de blocs de cellules (110).

2. Module de batterie selon la revendication 1, dans lequel la rainure (140, 240, 340) a une section transversale qui est définie en forme de V.

3. Module de batterie selon la revendication 1, dans lequel la rainure (140, 240, 340) est définie par traitement à la presse.

4. Module de batterie selon la revendication 1, dans lequel la rainure (140, 240, 340) est prévue sous une forme de ligne droite lorsqu'elle fait face à une surface de paroi intérieure (123) de la paroi latérale (122, 222, 322).

5. Module de batterie selon la revendication 1, dans lequel la rainure (240) est prévue sous une forme incurvée lorsqu'elle fait face à une surface de paroi intérieure de la paroi latérale (222).

6. Module de batterie selon la revendication 1, dans lequel la rainure (340) est prévue sous une forme de treillis lorsqu'elle fait face à une surface de paroi intérieure de la paroi latérale (322).
